# EUROPÄISCHE PATENTSCHRIFT

(11) **EP 2 480 437 B1**
(45) Veröffentlichungstag und Bekanntmachung des Hinweises auf die Patenterteilung: **06.03.2019**
(21) Anmeldenummer: 10757174.7
(22) Anmeldetag: 23.08.2010
(51) Int. Cl.: B60T 8/32, B60T 17/22, B60T 13/66, B60T 13/74

(54) **BREMSSYSTEM MIT INTELLIGENTEM AKTUATOR ZUM ABBREMSEN EINES SCHIENENGEFÜHRTEN FAHRZEUGS**
BRAKE SYSTEM HAVING SMART ACTUATOR FOR BRAKING A RAIL-GUIDED VEHICLE
SYSTÈME DE FREINAGE DOTÉ D'UN ACTIONNEUR INTELLIGENT POUR LE FREINAGE D'UN VÉHICULE FERROVIAIRE

(30) Priorität: 23.09.2009 DE 102009042965
(43) Veröffentlichungstag der Anmeldung: 01.08.2012
(73) Patentinhaber: Siemens Mobility GmbH, 81739 München (DE)
(72) Erfinder: WIESAND, Manfred, 90559 Burgthann (DE); SCHIFFERS, Toni, 41812 Erkelenz (DE)
(86) Internationale Anmeldenummer: PCT/EP2010/062232
(87) Internationale Veröffentlichungsnummer: WO 2011/036003

(56) Entgegenhaltungen:
- EP-A2- 1 266 814
- WO-A1-02/47953
- DE-A1- 10 106 377

## Beschreibung

Die Erfindung betrifft einen Aktuator für ein Bremssystem eines Schienenfahrzeugs mit Mitteln zum Erzeugen einer Bremsbewegung wenigstens eines Anpressteils mit einer Bremskraft F und mit einem Versorgungsanschluss zur Verbindung des Aktuators mit einer Energiespeichereinheit, wobei der Aktuator in seiner Gesamtheit zur Montage in einem Drehgestell des Schienenfahrzeugs eingerichtet ist.

Die Erfindung betrifft ferner ein Bremssystem zum Bremsen eines Schienenfahrzeugs mit einem in seiner Gesamtheit zur Montage in einem Drehgestell des Schienenfahrzeugs eingerichteten Aktuator, der zur Erzeugung einer Bremsbewegung wenigstens eines Anpressteils mit einer Bremskraft F eingerichtet ist, einem Energiespeicher, der über eine Versorgungsleitung mit dem Aktuator verbunden ist, und einer Steuersignale bereitstellenden Bremssteuerung zum Steuern oder Regeln des Bremssystems.

Die Erfindung betrifft auch ein Schienenfahrzeug mit mehreren Wagen, die zu einem Fahrzeugverbund aneinander gekoppelt sind, wobei jeder Wagen über wenigstens ein Drehgestell und wenigstens eine Luftfeder verfügt.

Aus dem Stand der Technik sind pneumatische Bremssysteme für Schienenfahrzeuge bekannt. Pneumatische Bremssysteme verfügen in der Regel über eine wagenseitige Bremssteuerung, die auf elektrisch ansteuerbare Regelventile zugreift. Wagenseitig ist ein Kompressor vorgesehen, welcher Atmosphärenluft unter Gewinnung von Druckluft komprimiert und die Druckluft in einem Druckluftspeicher bereitstellt. Der Druckluftspeicher kann daher auch als Energiespeicher bezeichnet werden. Der Energiespeicher ist in der Regel über Rohr- und/oder Schlauchverbindungen mit einem Aktuator verbunden, wobei die ansteuerbaren Regelventile in der pneumatischen Verbindungsleitung zwischen Energiespeicher und Aktuator angeordnet sind. Ein Aktuator weist allgemein einen Bremszylinder sowie Bremszangen oder Bremsbetätigungseinheiten (z.B. Klotzbremseinheit) auf. Die Bremszangen oder Bremsbetätigungseinheiten sind jeweils mit einem Anpressteil, wie beispielsweise einem Bremsbelag, versehen, das einer bei Fahrt des Schienenfahrzeugs rotierenden Bremsscheibe gegenüber liegt. In dem Bremszylinder ist ein Bremskolben beweglich angeordnet, wobei der Bremskolben zusammen mit dem Bremszylinder eine Bremskammer dichtend begrenzt, die von dem Energiespeicher mit Druck beaufschlagt werden kann. Der in der Bremskammer erzeugte Druck wird von der Bremssteuerung mit Hilfe der ansteuerbaren Regelventile eingestellt. Eine Druckänderung bewirkt eine Bewegung des Bremskolbens in dem Bremszylinder mit einer Bremskraft, die über eine zweckmäßige Hebelmechanik in das Anpressteil eingeleitet wird. Es kommt zu einem Reibschluss zwischen Anpressteil und Bremsscheibe. Elektropneumatische Bremssysteme sind raumgreifend und tragen mit ihrem hohen Eigengewicht zu einem hohen Energieverbrauch der Schienenfahrzeuge bei.

Aus der Druckschrift DE 10 2006 044 022 A1 ist eine selbstverstärkende hydraulische Bremse bekannt. Darüber hinaus sind selbstverstärkende elektromechanische Bremsen in Gestalt von Keilbremsen aus dem Stand der Technik bekannt geworden.

Aus der Druckschrift WO 02/47953 A1 ist ein gattungsgemäßer Aktuator in Form eines elektromechanischen Bremsaktuators für eine Schienenfahrzeugbremse bekannt, der ein Aktuatorgehäuse sowie elektronische Komponenten wie beispielsweise Leistungselektronik, Steuerelektronik oder Sensorik beinhaltet.

Ferner ist aus der Druckschrift EP 1 266 814 A2 ein Bremssystem mit Bremsaktuatoren umfassenden, elektromechanischen Bremszuspanneinrichtungen bekannt, bei dem jeder der Bremszuspanneinrichtungen jeweils ein lokales Bremssteuergerät zugeordnet ist, in dem Regelfunktionen wie beispielsweise eine Gleit- oder Schlupfregelung und/oder eine Bremskraftregelung realisiert werden können.

Weiterhin ist aus der Druckschrift DE 101 06 377 A1 eine elektromechanische Bremszuspanneinrichtung bekannt, die eine Betriebsbremseinheit und eine Speicherbremseinheit umfasst, wobei die Betriebsbremseinheit eine von einem elektrischen Stellmotor antreibbare Bremsspindel umfasst. Dabei ist die Betriebsbremseinheit zur Erzeugung von lastkorrigierten und/oder schlupfgeregelten Bremskräften ausgebildet und weist hierzu eine mit einem Steueranschluss versehene Regeleinrichtung auf, in welche mittels einer Signalleitung von einem Kraftsensor ein Signal für den Bremskraft-Istwert einsteuerbar und dort mit einem Bremskraft-Sollwert zur Ermittlung einer Regeldifferenz vergleichbar ist. Die Speicherbremseinheit weist einen Energiespeicher zum Speichern und Abgeben von Energie zum Zuspannen der Bremszuspanneinrichtung im Sicherheits- oder Notbremsfall auf. - Die Druckschrift DE 101 06 377 A1 zeigt also eine Bremszuspanneinrichtung mit einem Steuerungsanschluss zum Anschluss einer Datenleitung und mit einer mit dem Steuerungsanschluss verbundenen Logikeinheit, die zum Einstellen der Bremskraft in Abhängigkeit eines über die Datenleitung übermittelten Steuerungssignals einer Bremssteuerung eingerichtet ist, wobei die Bremszuspanneinrichtung außerdem geeignet ausgebildet ist, eine Notbremsung einzuleiten.

Aufgabe der Erfindung ist es, einen Aktuator, ein Bremssystem und ein Schienenfahrzeug der eingangs genannten Art bereitzustellen, die ein sicheres Bremsen des Schienenfahrzeugs ermöglichen.

Die Erfindung löst diese Aufgabe ausgehend von einem Aktuator mit den Merkmalen des Oberbegriffes des Patentanspruches 1 (DE 101 06 377 A1) dadurch, dass der Aktuator geeignet ausgebildet ist, die Bremskraft bei der Notbremsung auf einen von einer Zuladungsinformation einer Wandlereinheit abhängigen Maximalwert einzustellen.

Ausgehend von einem Bremssystem mit den Merkmalen des Oberbegriffes des Patentanspruches 8 (DE 101 06 377 A1) löst die Erfindung die Aufgabe dadurch, dass der Aktuator geeignet ausgebildet ist, die Bremskraft bei der Notbremsung auf einen von einer Zuladungsinformation einer Wandlereinheit abhängigen Maximalwert einzustellen.

Ausgehend von dem eingangs genannten Schienenfahrzeug löst die Erfindung die Aufgabe durch ein Schienenfahrzeug mit einem erfindungsgemäßen Bremssystem und/oder einem erfindungsgemäßen Aktuator.

Erfindungsgemäß ist ein "intelligenter" Aktuator bereitgestellt, wobei der intelligente Aktuator eine Logikeinheit aufweist, welche die Einstellung der Bremskraft unterstützt. Hierzu erhält der intelligente Aktuator über seinen Steuerungsanschluss ein Steuersignal, wie beispielsweise einen Sollwert. Das Steuersignal wird beispielsweise bearbeitet und anschließend an die Logikeinheit übertragen. Die Logikeinheit übernimmt das Einstellen der Bremskraft in Abhängigkeit des besagten Steuerungssignals. Dabei ist der intelligente Aktuator mit seinen sämtlichen Komponenten im Drehgestell des Schienenfahrzeugs angeordnet. Da die wagenseitige Bremssteuerung ausschließlich zur Übermittlung eines oder mehrerer Steuersignale mit den außerhalb des Wagens angeordneten Aktuatoren verbunden sein muss, ist eine einfache Datenleitung, Bus und/oder Drahtverbindung, zwischen diesen Komponenten ausreichend. Aufwändige pneumatische, hydraulische oder mechanische Verbindungen zwischen der wagenseitigen Steuerung und den Aktuatoren der Drehgestelle sind erfindungsgemäß vermieden. Dies vereinfacht die Auslegung, den Einbau und die Kosten eines erfindungsgemäßen Bremssystems.

Zweckmäßigerweise weist jeder erfindungsgemäße Aktuator eine Bremskrafterfassungseinheit zum Erfassen einer Messgröße auf, aus der die erzeugte momentane Bremskraft F als Istwert ableitbar ist, wobei die besagte Bremskrafterfassungseinheit mit der Logikeinheit verbunden ist. Die Auslegung der Bremskrafterfassungseinheit ist selbstverständlich von den Mitteln zum Erzeugen einer Bremskraft des Aktuators abhängig. Diese Mittel sind erfindungsgemäß grundsätzlich beliebig auslegbar und können beispielsweise elektropneumatisch, elektrohydraulisch oder elektromechanisch ausgebildet sein. In Abhängigkeit der Ausgestaltung der besagten Mittel erfasst die Bremskrafterfassungseinheit einen Messwert, beispielsweise einen hydraulischen Druck oder einen vom Aktuator erzeugten Strom oder aber auch eine Bewegung oder Verformung eines Teils einer übertragenden Hebelmechanik, wobei auf der Grundlage des Messwertes eine Bremskraft abgeleitet wird. Der Messwert wird beispielsweise an die Logikeinheit übermittelt, welche anhand des ebenfalls übertragenen Steuersignals die Bremskraft so einstellt, dass der erfasste Istwert einem von einer übergeordneten Steuerung vorgegebenen Sollwert möglichst genau entspricht. Mit anderen Worten stellt der intelligente Aktuator erfindungsgemäß eine Soll-/Istwertregelung bereit, wobei dem intelligenten Aktuator erfindungsgemäß der Sollwert von der übergeordneten Bremssteuerung zur Verfügung gestellt wird. Die Soll-Ist-Wert-Regelung bleibt auch während einer Not- oder Schnellbremsung aktiv. Da die Soll-Ist-Wert-Regelung durch den Aktuator selbst durchgeführt wird, bleibt diese Regelung auch bei einem Ausfall oder Fehler der Datenleitungen oder Busse des Schienenfahrzeugs aktiv. Wie weiter unten noch genauer ausgeführt werden wird, erfolgt die Vorgabe des Sollwertes in Abhängigkeit der Zuladung des Schienenfahrzeugs. Hierzu wird zweckmäßigerweise der Zustand einer Tragfeder, beispielsweise der Druck in einer Luftfeder mit einem zweckmäßigen Sensor erfasst, an der sich der Wagenkasten der jeweiligen Wagen abstützt. Somit erfolgt eine Bremsung stets lastkorrigiert. Dies gilt auch für eine Schnell- oder Notbremsung. Ist die Datenleitung fehlerfrei erfolgt die Bremsung darüber hinaus mit Gleitschutz. Dies gilt sogar für Notbremsungen.

Gemäß einer bevorzugten Ausgestaltung der Erfindung ist der Versorgungsanschluss ein elektrischer Versorgungsanschluss, der mit einer elektrischen Energieversorgungsleitung verbindbar ist und Ausgangsklemmen aufweist, an denen bei Betrieb des Aktuators eine Versorgungsspannung abfällt. Die Verbindung des Energiespeichers mit den im Drehgestell angeordneten Aktuatoren erfolgt gemäß dieser vorteilhaften Ausgestaltung über einen elektrischen Leiter. Die Verbindung zwischen den wagenseitigen Komponenten und den Bremssystemkomponenten des Drehgestells erfolgt somit ausschließlich mit Hilfe von optischen und/oder elektrischen Leitungen. Die aufwändigen hydraulischen oder pneumatischen Verbindungen zwischen den Drehgestellkomponenten und dem im Wagen des Schienenfahrzeugs angeordneten Komponenten des Bremssystems entfallen daher.

Zweckmäßigerweise ist die Datenleitung, zum Übertragen der Steuersignale, eine elektrische Datenleitung. Selbstverständlich ist auch eine Verbindung über Lichtwellenleiter im Rahmen der Erfindung möglich.

Ist der Energiespeicher ein elektrischer Energiespeicher und über eine Elektroleitung mit dem Versorgungsanschluss verbunden, fällt an den Ausgangsklemmen des Versorgungsanschlusses eine Versorgungsspannung ab. Diese Versorgungsspannung wird beispielsweise verwendet, um die Bremskraft zu erzeugen oder den Bremskraftaufbau zu initialisieren. Die hierbei notwendige Regelung zur Steuerung oder Einstellung der Bremskraft übernimmt, wie bereits ausgeführt wurde, die Logikeinheit des Aktuators. Elektrische Energiespeicher sind beispielsweise Batterien, Akkumulatoren, Supercaps, Kondensatoren, Brennstoffzellen oder dergleichen.

Vorteilhafterweise weisen die Mittel zur Erzeugung der Bremskraft eine elektromechanische Krafteinheit auf, die mit dem Versorgungsanschluss verbunden und zur Erzeugung einer mechanischen Auslösekraft in Abhängigkeit einer über den Versorgungsanschluss bereitgestellten Elektroenergie eingerichtet ist. Gemäß dieser vorteilhaften Weiterentwicklung ist eine elektromechanische Krafteinheit vorgesehen, die lediglich eine Auslösekraft bereitstellt, die für den weiteren Bremsbetrieb ursächlich ist. Die Auslösekraft bewirkt einen originären Reibschluss zwischen Anpressteil und einer sich bewegenden zu bremsenden Masse. Dieser originäre Reibschluss führt zum Beispiel bei selbstverstärkenden Bremsen zu einer Verstärkung der Bremskraft, ohne dass zusätzliche Energie von Außen in das Bremssystem eingebracht werden muss.

Zweckmäßigerweise ist die elektromechanische Krafteinheit ein Elektromotor, eine Elektropumpe oder ein Piezo-Element. Die elektromechanische Krafteinheit wirkt beispielsweise mit einem Kraftspeicher wie beispielsweise eine zu spannende Feder, ein Hydrospeicher oder -zylinder zusammen. Die Kraftspeicher werden von der Krafteinheit geladen, indem beispielsweise die Feder gespannt wird.

Zweckmäßigerweise sind die Mittel zum Erzeugen einer Bremsbewegung selbstverstärkend. Wie bereits weiter oben ausgeführt wurde, dient die elektromechanische Krafteinheit in diesem Falle lediglich zum Bereitstellen einer geringen Auslösekraft, welche einen Bremsvorgang einleitet. Aufgrund des selbstverstärkenden Effektes der elektromechanischen Krafteinheit kommt es zu einer stark anwachsenden Bremskraft, wobei die anwachsende Bremskraft der Regelung durch die Logikeinheit unterliegt. Solche selbstverstärkenden Mittel zur Erzeugung einer Bremskraft sind beispielsweise eine selbstverstärkende hydraulische Bremse, die aus dem Stand der Technik bereits bekannt ist oder aber auch eine selbstverstärkende elektromechanische Bremse, die auch als Keilbremse bezeichnet werden kann. Auch die Keilbremse ist dem Fachmann bereits bekannt. Der Vorteil des Einsatzes von selbstverstärkenden Krafterzeugungsmitteln ist darin zu sehen, dass lediglich eine geringe Kraft aufgebracht werden muss, um einen Bremsvorgang einzuleiten. Dies hat insbesondere Vorteile bei der Ausgestaltung der Verbindung des intelligenten oder erfindungsgemäßen Aktuators über die Energieversorgungsleitung mit dem beispielsweise wagenseitig angeordneten Kraftspeicher. Darüber hinaus wird beim Bremsen wenig Energie verbraucht. Die Betriebskosten sind somit gesenkt. Schließlich kann die Bremse kompakter und leichter ausgeführt werden, als dies bei Bremsen ohne Selbstverstärkung der Fall wäre.

Vorteilhafterweise sind elektrisch antreibbare Notlösemittel zum Lösen der Bremse und ein mit den Notlösemittel elektrisch verbundene Zusatzanschluss zum Anschluss einer externen Elektroenergieversorgung vorgesehen. Mit Hilfe der Notlösemittel ist es möglich, die mit dem erfindungsgemäßen Aktuator verbundene Bremse von Außen zu lösen. Hierzu wird der Zusatzanschluss beispielsweise mit eine vorgegebenen Versorgungsspannung beaufschlagt, so dass die beispielsweise einen Elektromotor und Spindel umfassenden Notlösemittel eine Feder spannen und so die Bremse lösen.

Bei einer weiteren zweckmäßigen Ausgestaltung des erfindungsgemäßen Bremssystems ist der Energiespeicher ein elektrischer Energiespeicher, der ausgangsseitig eine elektrische Versorgungsspannung bereitstellt. Gemäß dieser Variante der Erfindung ist der Energiespeicher über eine elektrische Verbindungsleitung mit dem erfindungsgemäßen Aktuator verbunden.

Zweckmäßigerweise ist die Wandlereinheit mit der Bremssteuerung und/oder mit dem Aktuator verbunden ist, wobei die Wandlereinheit über wenigstens einen Umsetzer verfügt, der ausgangsseitig eine elektrische Größe in Abhängigkeit eines eingangsseitig zugeführten Druckes oder auch eines elektrischen Signals bereitstellt, wobei der oder die Umsetzer zur Verbindung mit einem den Zustand der Tragfeder erfassenden Signalgeber des Schienenfahrzeuges und/oder wenigstens einer pneumatischen Leitung eines Schienenfahrzeugs vorgesehen ist. Gemäß dieser zweckmäßigen Weiterentwicklung ist es möglich, das Bremssystem über Druckleitungen beispielsweise über eine so genannte Hauptluftleitung (HL) zu steuern. Die Wandlereinheit ist zweckmäßigerweise mit der Bremssteuerung und/oder mit den intelligenten Aktuatoren über eine elektrische oder optische Datenleitung verbunden. Die Umwandlung eines pneumatischen Steuerdruckes erfolgt mit Hilfe von Umsetzern, die am Markt erhältlich sind und dem Fachmann daher bestens bekannt sind. Eine genaue Ausführung der Wirkungsweise solcher Umsetzer kann hier entfallen. Die Umsetzer stellen ausgangsseitig eine elektrische oder optische Messgröße bereit, die dem eingangsseitig anliegenden pneumatischen oder hydraulischen Druck beziehungsweise Signal entspricht. Die Wandlereinheit überträgt die so gewonnene Messgröße über die Datenleitung zur Bremssteuerung. Selbstverständlich ist zuvor eine Messwertverarbeitung möglich. In diesem Zusammenhang ist es auch zweckmäßig, die Wandlereinheit über eine elektrische Versorgungsleitung mit dem Energiespeicher zu verbinden. Der Energiespeicher stellt die möglicherweise von dem Umsetzer benötigte Elektroenergie bereit. Die Wandlereinheit ist im Übrigen beliebig anordenbar und kann beispielsweise ebenfalls im Drehgestell oder auch wagenseitig angeordnet sein. Die Tragfeder ist beispielsweise als Luftfeder, Sekundärfeder, Stahlfeder, Flexicoilfeder mit Gummizusatzfeder oder eine Hydropneumatische Feder. Im Falle einer Luftfeder kommuniziert die Wandlereinheit mit der Luftfeder über eine pneumatische Leitung.

Zweckmäßigerweise ist die Datenleitung ein Datenbus, welcher Bremssteuerung, jeden Aktuator und jede Wandlereinheit miteinander verbindet. Solche Datenbusse sind im Bereich der Industriesteuerung bestens bekannt und für den Kommunikationsaustausch zwischen mehreren Komponenten einer Anlage ausgelegt, so dass eine besonders wirksame und schnelle Kommunikation bereitgestellt ist, die darüber hinaus den gestellten Sicherheitsansprüchen gerecht wird.

Zweckmäßigerweise sind die Aktuatoren an eine elektrische Sicherheitsschleife zum Übertragen von Steuersignalen angeschlossen. Die elektrische Sicherheitsschleife ist aus dem Bereich der pneumatischen Bremsen bereits bekannt. Sie dient in der Regel zum Auslösen eines Notbremsbefehls, beispielsweise in Folge des Betätigens eines wagenseitigen Sicherheitsschalters. Durch eine solche Betätigung wird die elektrische Sicherheitsschleife geöffnet, woraufhin die Logikeinheit des erfindungsgemäßen Aktuators für eine Schnellbremsung sorgt.

Vorteilhafterweise sind Mittel zum Erfassen des Beladungszustandes und/oder der Masse des Schienenfahrzeugs, die mit Aktuatoren verbunden sind, wobei die besagten Aktuator in Abhängigkeit des Beladungszustandes und/oder der Masse die einzustellende Bremskraft begrenzen. Diese Mittel zum erfassen des Beladungszustandes sind beispielsweise die oben genannten Umsetzer der Wandlereinheit. Allerdings kommen im Rahmen der Erfindung auch andere Sensoren in Betracht. Zweckmäßigerweise ist jeder Aktuator mit den besagten Mitteln verbunden.

Gemäß einer vorteilhaften Weiterentwicklung des erfindungsgemäßen Schienenfahrzeuges weist jeder Wagen des Fahrzeugverbunds des Schienensystems wenigstens ein Bremssystem der weiter oben genannten Art auf. Gemäß einer Variante, verfügt jeder Wagen über zwei solcher Bremssysteme, wobei beispielsweise jedes Bremssystem über eine Wandlereinheit verfügt, die jeweils mit einer Luftfeder des besagten Wagens verbunden ist. Selbstverständlich kann jede Wandlereinheit auch mit zwei Luftfedern des gleichen Wagens verbunden sein, falls dies zweckmäßig ist. Ist für jeden Wagen nur ein Bremssystem vorgesehen und ist beispielsweise ein Wandler Teil des erfindungsgemäßen Bremssystems, so ist diese selbstverständlich je nach Bedarf mit einer oder mehreren Luftfedern oder aber mit allen Luftfedern eines Wagens verbunden.

Wie bereits ausgeführt wurde, erstreckt sich zweckmäßigerweise eine Sicherheitsschleife durch den gesamten Fahrzeugverbund des Schienenfahrzeugs. Die Sicherheitsschleife ist mit jedem der Aktuatoren verbunden. Die Sicherheitsschleife ist beispielsweise eine einfache Drahtverbindung.

Darüber hinaus weist gemäß einer bevorzugten Ausgestaltung das Schienenfahrzeug eine sich durch alle Wagen erstreckende Druckluftleitung, beispielsweise eine Hauptluftleitung, zum Führen eines pneumatischen Steuerdrucks auf. Die Hauptluftleitung ist mit jeder Wandlereinheit verbunden.

Zur Verbindung der Bremssysteme eines Schienenfahrzeugs dient zweckmäßigerweise eine Fahrzeugverbunddatenleitung.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei
- Figur 1: ein Ausführungsbeispiel des erfindungsgemäßen Aktuators in schematischer Darstellung,
- Figuren 2 Bis 4: Ausführungsbeispiele eines erfindungsgemäßen Bremssystems schematisch und
- Figuren 5 und 6: in schematischer Darstellung Ausführungsbeispiele des erfindungsgemäßen Schienenfahrzeugs zeigen.

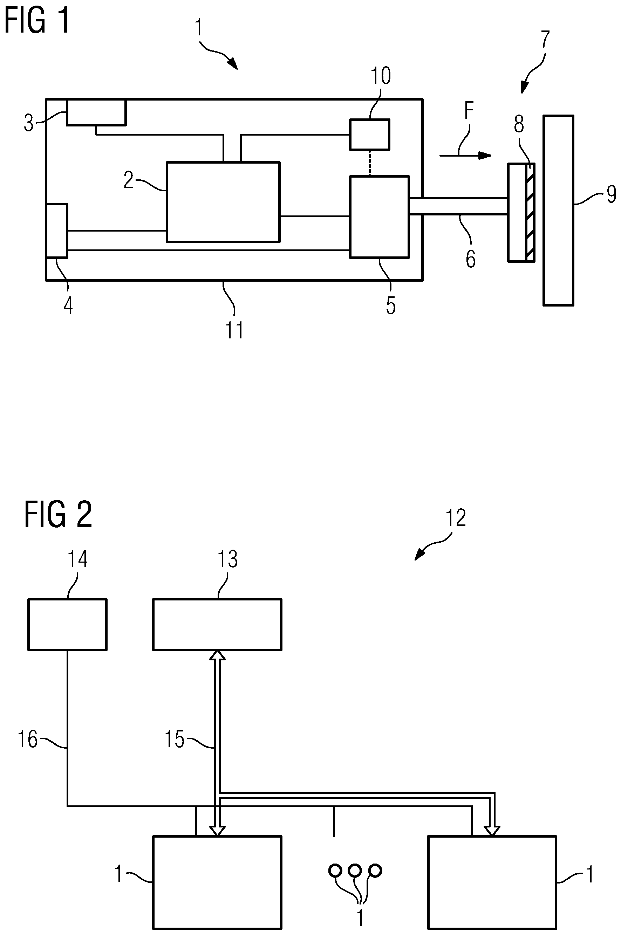

Figur 1 zeigt ein Ausführungsbeispiel eines erfindungsgemäßen Aktuators 1 schematisch. Der Aktuator 1 verfügt über eine Logikeinheit 2, die über elektrische oder optische Verbindungsleitungen mit einem Steuerungsanschluss 3 verbunden ist. Zur Energieversorgung dient ein Versorgungsanschluss 4, der mit einem Energiespeicher verbindbar ist, so dass an dem Ausgang des Versorgungsanschlusses 4 eine Versorgungsspannung abfällt. Darüber hinaus weist der Aktuator 1 Mittel zum Erzeugen einer Bremsbewegung 5 z.B. in Form einer selbstverstärkenden elektrohydraulischen Bremse 5 auf. Die selbstverstärkende elektrohydraulische Bremse 5 verfügt über eine figürlich nicht dargestellte elektromechanische Krafteinheit, wie beispielsweise einen Elektromotor oder eine mit einem Speicher verknüpfte Pumpe, die einen das Bremsen auslösenden Hydraulikdruck aufbaut, der in einem Hydraulikbremszylinder, der ebenfalls Teil der selbstverstärkenden hydraulischen Bremse 5 ist, für die Erzeugung einer Bremsbewegung mit einer Bremskraft F sorgt. Die Bremskraft F wird über eine zweckmäßige Hebelmechanik 6 in einen Anpressteilhalter 7 eingeleitet, der mit einem Anpressteil 8 ausgerüstet ist, der einer Bremsscheibe 9 eines figürlich nicht dargestellten Schienenfahrzeugs gegenüberliegend angeordnet ist. Bei dem Anpressteil 7 handelt es sich in dem gezeigten Ausführungsbeispiel um einen Bremsbelag. Der Begriff Aktuator umfasst hier auch den Bremssattel 7 mit seinem Anpressteil 8. Bei einer Fahrt des Schienenfahrzeugs kommt es zu seiner Rotationsbewegung der Bremsscheibe 9, die drehfest mit einer Laufachse des Schienenfahrzeugs verbunden ist. Durch Anpressen des Anpressteils 8 unter Reibschluss an die Bremsscheibe 9 kommt es zu einer negativen Beschleunigung des Schienenfahrzeugs, bzw. zum Aufbau einer Verzögerungskraft am Rad.

Der Aktuator 1 verfügt weiterhin über eine Bremskrafterfassungseinheit 10, mit welcher ein der Bremskraft entsprechendes elektrisches Signal an die Logikeinheit gegeben wird.

Zum Antrieb der elektromechanischen Krafteinheit, wobei es sich bei dem gezeigten Ausführungsbeispiel um einen Elektromotor handelt, ist die selbstverstärkende Bremse 5 mit dem Versorgungsanschluss 4 verbunden. Hierzu dient eine elektrische Verbindung, die in Figur 1 sowie in den anderen Figuren durch eine durchgehende Linie dargestellt ist. Pneumatische Verbindungen werden ebenfalls durch gestrichelte Linien dargestellt. Die Einstellung des Sollwertes des Aktuators 1 erfolgt durch eine übergeordnete Bremssteuerung des Schienenfahrzeugs. Die Bremssteuerung stellt für jeden Aktuator 1 einen Sollwert bereit, der von der Bremssteuerung an den Steuerungsanschluss 3 und somit an die Logikeinheit 2 übertragen wird. Aufgrund der Verbindung zwischen der Bremskrafterfassungseinheit 10 und der Logikeinheit 2 verfügt die Logikeinheit 2 neben dem Sollwert auch über einen Istwert. Darüber hinaus ist die Logikeinheit 2 mit einer implementierten oder programmierten Logik ausgerüstet, mit deren Hilfe es ihr ermöglicht ist, beispielsweise die selbstverstärkende hydraulische Bremse 5 so zu regeln, dass der Istwert dem Sollwert möglichst genau entspricht. Auf diese Art und Weise ist ein intelligenter Aktuator 1 bereitgestellt.

Mit Ausnahme der Hebelmechanik 6 und des Anpressteilhalters mit Anpressteil 7 sind sämtliche Komponenten des erfindungsgemäßen Aktuators 1 in oder an einem gemeinsamen Gehäuse 11 angeordnet. Das Gehäuse 11 ist über zweckmäßige Befestigungsmittel, wie beispielsweise Schrauben oder dergleichen, in einem Drehgestell des nicht gezeigten Schienenfahrzeugs montiert. Da auch Bremssattel 7 und Hebelmechanik 6 im Drehgestell angeordnet sind, sind sämtliche Komponenten des Aktuators 1 zur Montage im Drehgestell eingerichtet und entsprechend ausgelegt.

Figur 2 zeigt ein Ausführungsbeispiel des erfindungsgemäßen Bremssystems 12, das mehrere Aktuatoren 1 gemäß Figur 1 aufweist. Die Anzahl der Aktuatoren 1 ist von der jeweiligen Anforderung abhängig. Die Anzahl der Aktuatoren 1 ist durch die Kreise daher variabel dargestellt. Beispielsweise umfasst das Bremssystem 12 zwei Aktuatoren 1 für jede Achse des Drehgestells. Zweiachsige Drehgestelle weisen daher vier Aktuatoren 1 auf.

Darüber hinaus umfasst das Bremssystem 12 eine übergeordnete Bremssteuerung 13 sowie einen Energiespeicher 14. Die Bremssteuerung 13 ist über eine elektrische Datenleitung, einen so genannten Datenbus 15, mit den ihr zugeordneten intelligenten Aktuatoren 1 verbunden. Der Datenbus 15 ist beispielsweise ein Industriebussystem, das dem Fachmann bekannt ist, so dass hierauf nicht detailliert eingegangen zu werden braucht. Es sei darauf hingewiesen, dass der Datenbus 15 sowohl einen Informationsaustausch zwischen der Bremssteuerung 13 und den Aktuatoren 1 als auch unter den Aktuatoren 1 selbst ermöglicht. Der Energiespeicher 14 ist über elektrische Versorgungsleitungen 16 mit dem Versorgungsanschluss 4, siehe Figur 1, jedes Aktuators 1 verbunden. Er dient zur Bereitstellung zumindest eines Teils der zum Bremsen und Lösen der Bremse notwendigen Energie.

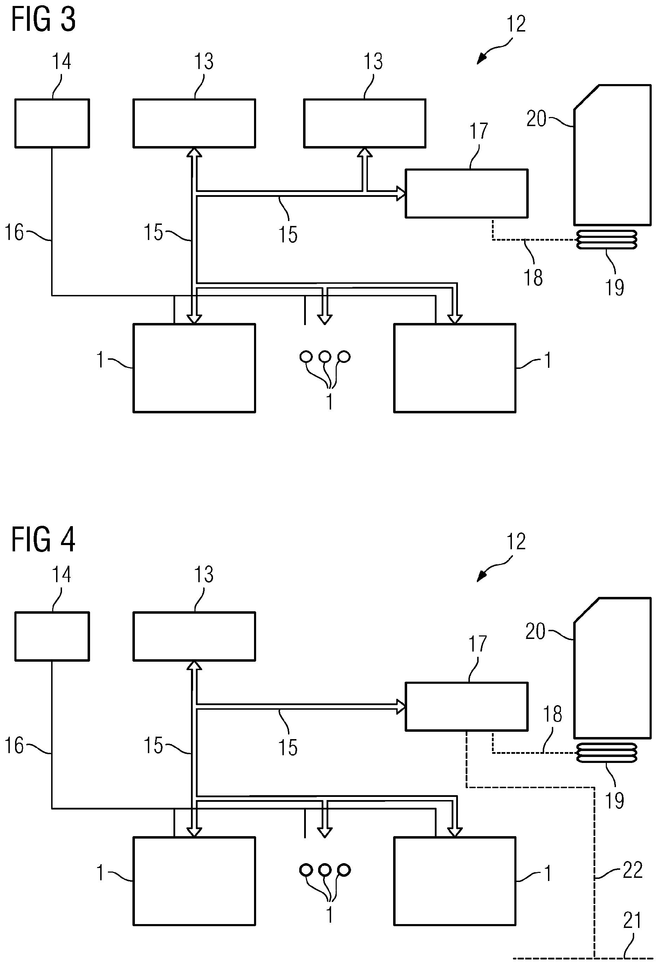

Figur 3 zeigt ein weiteres Ausführungsbeispiel des erfindungsgemäßen Bremssystems 12 gemäß Figur 2, wobei jedoch im Unterschied zu dem in Figur 2 gezeigten Ausführungsbeispiel eine Wandlereinheit 17 vorgesehen ist, mit deren Hilfe der Beladungszustand des zu bremsenden Wagens des Schienenfahrzeugs oder des gesamten Schienenfahrzeugs beim Bremsen berücksichtigt werden kann. Hierzu ist die Wandlereinheit 17 über eine pneumatische Schnittstelle 18 mit einer Luftfeder 19 verbunden. Hierbei sei angemerkt, dass ein Wagenkasten 20 des Schienenfahrzeugs, über die Luftfeder 19 auf einem nicht dargestellten Drehgestell des Schienenfahrzeugs gelagert ist. Je nach Beladungszustand wird die Luftfeder daher unterschiedlich stark komprimiert, so dass der in der Luftfeder 19 vorherrschende Luftdruck ein Maß für den Beladungszustand des Wagens 20 ist. In Schienenfahrzeugen ohne pneumatische Sekundärfeder kann das Lastsignal auch eine elektrische Größe sein. Die Wandlereinheit 17 verfügt über einen figürlich nicht dargestellten Umsetzer, der mit dem Druck der Luftdruckfeder 10 eingangsseitig beaufschlagt ist. Ausgangsseitig stellt der Umsetzer ein Stromsignal bereit, das dem Druck der Luftfeder 19 entspricht. Die Wandlereinheit 17 weist ferner Mittel zur Messwertebearbeitung auf, welche das Stromsignal abtasten. Die dabei gewonnen Abtastwerte werden durch eine Analog/Digitaleinheit digitalisiert. Das digitale Stromsignal wird anschließend von einer Umrecheneinheit der Wandlereinheit 17 in ein Zuladungsgewicht umgerechnet, das ein Maß für den Beladungszustand darstellt. Das Zuladungsgewicht wird anschließend über den Datenbus 15 an die übergeordnete Bremssteuerung 13 und die intelligenten Aktuatoren 1 übertragen. Es ist erkennbar, dass in Figur 3 die übergeordnete Bremssteuerung 13 durch zwei separate Einheiten 13 dargestellt ist. Dies soll verdeutlichen, dass die Bremssteuerung 13 redundant ausgelegt ist, so dass beim Ausfall einer Bremssteuerung 13 eine zweite Bremssteuerung 13 ein sicheres Bremsen ermöglicht. Selbstverständlich ist es auch möglich die Komponenten einer Bremssteuerung auf zwei Gehäuse, die separat augestellt sind, zu verteilen. In Figur 3 tauschen beide Bremssteuerungen 13 über den Datenbus 15 mit den Aktuatoren 1 und der Wandlereinheit 17 Daten aus. Die Bremssteuerungen 13 ermitteln auf der Grundlage des übermittelten Belastungszustands Sollwerte, die dann an die Aktuatoren übertragen werden.

Das Ausführungsbeispiel gemäß Figur 4 entspricht weitestgehend dem in Figur 3 gezeigten Ausführungsbeispiel, wobei die Wandlereinheit 17 in dem Ausführungsbeispiel gemäß Figur 4 zusätzlich mit dem Druck einer pneumatischen Hauptluftleitung 21 eingangsseitig beaufschlagt wird. Hierzu ist die Hauptluftleitung 21 über eine Verbindungsleitung 22 mit der Wandlereinheit 17 pneumatisch verbunden. Die Wandlereinheit 17 gemäß Figur 4 verfügt daher über zwei Umsetzer, die jeweils ein elektrisches Signal in Abhängigkeit des Druckes der Hauptluftleitung beziehungsweise der Luftfeder 19 bereitstellen. Dem Bremssystem 12 gemäß Figur 4 kann auf diese Weise über die Hauptluftleitung eine gewünschte Bremsverzögerung vorgegeben werden. Die Wandlereinheit 17 wandelt den Druck der Hauptluftleitung 21 in ein entsprechendes elektrisches und beispielsweise digitales Signal um und stellt dieses der Bremssteuerung 13 über den Datenbus 15 zur Verfügung, der ein dem Druck der Hauptluftleitung 21 entsprechenden Sollwert oder ein entsprechendes Steuersignal an die Aktuatoren 1 überträgt. Diese erzeugen dann aufgrund ihrer internen Logik einen Istwert, welcher dem Sollwert weitestgehend entspricht.

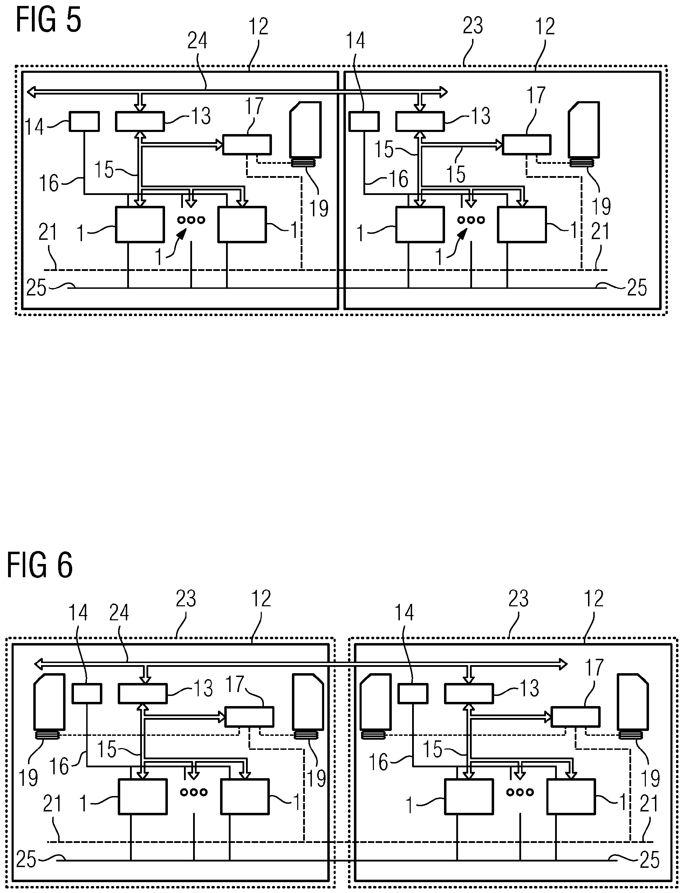

Figur 5 zeigt schematisch einen durch eine gepunktete Linie dargestellten Wagen 23 eines Schienenfahrzeugs, der zwei Bremssysteme 12 gemäß Figur 4 aufweist. Die Bremssysteme 12 sind über eine Fahrzeugdatenleitung 24, ebenfalls ein Datenbus, miteinander verbunden. Genauer betrachtet sind die übergeordneten Bremssteuerungen 13 jedes Bremssystems 12 mit dem Fahrzeugdatenbus 24 verbunden. Die Bremssteuerungen 13 weisen eine hierfür zweckmäßige Schnittstelle auf. Über die Fahrzeugdatenleitung 24 ist ein Bremsbefehl, beispielsweise vom Fahrzeugführer, an die einzelnen Bremssteuerungen 13 des Wagens 23 übermittelbar. Jede Bremssteuerung 13 ist über die entsprechende Wandlereinheit 17 mit einer ihr zugeordneten Luftfeder 19 verbunden und erzeugt aufgrund der ihr bekannten Zuladung und in Abhängigkeit des zentralen Bremsbefehls Sollwerte für die ihr zugeordneten intelligenten Aktuatoren 1. Hierbei ist es keineswegs erforderlich, dass alle Aktuatoren 1, die der Bremssteuerung 13 zugeordnet sind, den gleichen Sollwert erhalten. Im Rahmen der Erfindung ist es durchaus möglich, dass die Bremssteuerung 13 an jeden Aktuator 1, der ihr zugeordnet ist, unterschiedliche Bremssollwerte überträgt. Die Sollwerte der anderen Bremssteuerungen 13 können sich darüber hinaus beispielsweise aufgrund eines abweichenden Druckes in der jeweiligen Luftfeder 19 voneinander unterschieden.

Ferner ist erkennbar, dass die Aktuatoren 1 über eine elektrische Sicherheitsschleife 25 miteinander verbunden sind. Eine solche elektrische Sicherheitsschleife 25 ist bereits bei pneumatischen Bremsen gängige Praxis. Wird die elektrische Verbindung dieser Sicherheitsschleife 25 unterbrochen, leitet jeder intelligente Aktuator 1 eine Notbremsung ein, die von der Betriebsbremse unabhängig ist. Eine solche Notbremsung wird beispielsweise durch Drücken eines wagenseitigen Notbremsknopfes ausgelöst. Nach der erfindungsgemäßen Lösung wird eine solche Notbremsung von den Aktuatoren 1 mit maximaler Bremskraft eingestellt, wobei der Maximalwert der Bremskraft in Abhängigkeit der Zuladungsinformation von der Wandlereinheit 17 erfolgt. Erfolgt eine solche Notbremsung bei einer gestörten Kommunikation zwischen Wandlereinheit 17 und den Aktuator 1, dann stellt der Aktuator 1 einen Ersatzwert zur Begrenzung der Bremskraft ein.

Figur 6 zeigt ein weiteres Ausführungsbeispiel eines erfindungsgemäßen Schienenfahrzeugs, bei dem zwei Wagen 23 dargestellt sind, die jeweils durch eine punktierte Linie verdeutlicht sind. Es ist erkennbar, dass jeder Wagen 23 über ein Bremssystem 12 verfügt, wobei die Wandlereinheit 17 eines jeden Bremssystems 12 mit zwei Luftfedern 19 pneumatisch verbunden ist. Die von den Wandlereinheiten 17 erfassten Druckmesswerte der Luftfedern 19 werden an die übergeordnete Bremssteuerung 13 und die Aktuatoren 1 übertragen, die für den Wagen 23 sämtliche Sollwerte berechnet und über den Datenbus 12 den Aktuatoren 1 zukommen lässt. Darüber hinaus ist die Wandlereinheit 17 mit der Hauptluftleitung 21 verbunden, die sich durch den gesamten Wagenverbund hindurch erstreckt. Entsprechendes gilt für die Sicherheitsschleife 25, die wieder alle Aktuatoren 1 aller Bremssysteme 12 miteinander verbindet. Die Bremssteuerung 13 eines jeden Bremssystems 12 eines Wagens ist wieder über einen Fahrzeugdatenbus 24 mit den restlichen Bremssteuerungen 18 des Schienenfahrzeugs verbunden. Im Übrigen gilt das in Zusammenhang mit Figur 5 gesagte.

Abschließend sei darauf hingewiesen, dass die im Rahmen der Erfindung Wandlereinheit 17 nicht, wie in den Figuren dargestellt, als separates Bauteil mit einem eigenen Gehäuse ausgebildet sein muss. Vielmehr ist es im Rahmen der Erfindung auch möglich, die Wandlereinheit 17 als Teil der Bremssteuerung auszugestalten. Die Wandlereinheit 17 ist somit in dem Gehäuse der jeweiligen zugeordneten Bremssteuerung untergebracht. Zur Energieversorgung können sämtliche Bauteile des Bremssystems, insbesondere auch die Wandlereinheit, im Rahmen der Erfindung mit der Energiespeichereinheit 14 verbunden sein. Die Energiespeichereinheit kann auch das lokale Bordnetz sein.

## Patentansprüche

1. Aktuator (1) für ein Bremssystem (12) eines Schienenfahrzeugs mit Mitteln zum Erzeugen einer Bremsbewegung (5) wenigstens eines Anpressteils (8) mit einer Bremskraft (F), mit einem Versorgungsanschluss (4) zur Verbindung des Aktuators (1) mit einer Energiespeichereinheit (14), mit einem Steuerungsanschluss (3) zum Anschluss einer Datenleitung (15) und mit einer mit dem Steuerungsanschluss (3) verbundenen Logikeinheit (2), die zum Einstellen der Bremskraft (F) in Abhängigkeit eines über die Datenleitung (15) übermittelten Steuerungssignals einer Bremssteuerung (13) eingerichtet ist, wobei der Aktuator (1) in seiner Gesamtheit zur Montage in einem Drehgestell des Schienenfahrzeugs eingerichtet ist und wobei der Aktuator geeignet ausgebildet ist, eine Notbremsung einzuleiten,
**dadurch gekennzeichnet, dass**
der Aktuator geeignet ausgebildet ist, die Bremskraft (F) bei der Notbremsung auf einen von einer Zuladungsinformation einer Wandlereinheit (17) abhängigen Maximalwert einzustellen.

2. Aktuator (1) nach Anspruch 1,
**gekennzeichnet durch**
eine Bremskrafterfassungseinheit (10) zum Erfassen einer Messgröße, aus der die erzeugte Bremskraft (F) als Istwert ableitbar ist, wobei die besagte Bremskrafterfassungseinheit (10) mit der Logikeinheit (2) verbunden ist.

3. Aktuator (1) nach Anspruch 1 oder 2,
**dadurch gekennzeichnet, dass**
der Versorgungsanschluss (4) ein elektrischer Versorgungsanschluss ist, der mit einer elektrischen Energieversorgungsleitung (16) verbindbar ist und Ausgangsklemmen aufweist, an denen bei Betrieb des Aktuators (1) eine Versorgungsspannung abfällt.

4. Aktuator (1) nach Anspruch 3,
**dadurch gekennzeichnet, dass**
die Mittel zur Erzeugung der Bremsbewegung (5) eine elektromechanische Krafteinheit aufweisen, die mit dem Versorgungsanschluss (4) verbunden ist und zur Erzeugung einer mechanischen Auslösekraft in Abhängigkeit einer über den Versorgungsanschluss (4) bereitgestellten Elektroenergie eingerichtet ist.

5. Aktuator (1) nach Anspruch 4,
**dadurch gekennzeichnet, dass**
die elektromechanische Krafteinheit ein Elektromotor, eine Elektropumpe oder ein Piezo-Element ist.

6. Aktuator (1) nach einem der vorhergehenden Ansprüche,
**dadurch gekennzeichnet, dass**
die Mittel zum Erzeugen einer Bremsbewegung (5) selbstverstärkend sind.

7. Aktuator (1) nach einem der vorhergehenden Ansprüche,
**gekennzeichnet durch**
elektrisch antreibbare Notlösemittel zum Lösen der Bremse und mit den Notlösemittel elektrisch verbundene Anschlussmittel zum Anschluss einer externen Elektroenergieversorgung.

8. Bremssystem (12) zum Bremsen eines Schienenfahrzeugs mit
- einem in seiner Gesamtheit zur Montage in einem Drehgestell des Schienenfahrzeugs eingerichteten Aktuator (1), der zur Erzeugung einer Bremsbewegung wenigstens eines Anpressteils mit einer Bremskraft (F) eingerichtet ist,
- einem Energiespeicher (14), der über eine Versorgungsleitung (16) mit dem Aktuator (1) verbunden ist, und
- einer Steuersignale bereitstellenden Bremssteuerung (13) zum Steuern oder Regeln des Bremssystems (12),
- bei der der Aktuator (1) einen Steuerungsanschluss (3) aufweist, der zum Empfangen der Steuersignale über eine Datenleitung (15) mit der Bremssteuerung (13) verbunden ist, wobei der Steuerungsanschluss mit einer Logikeinheit (2) des Aktuators (1) verbunden ist, die zum Einstellen der Bremskraft (F) in Abhängigkeit der Steuersignale eingerichtet ist und
- bei der der Aktuator geeignet ausgebildet ist, eine Notbremsung einzuleiten,
**dadurch gekennzeichnet, dass** der Aktuator geeignet ausgebildet ist, die Bremskraft (F) bei der Notbremsung auf einen von einer Zuladungsinformation einer Wandlereinheit (17) abhängigen Maximalwert einzustellen.

9. Bremssystem (12) nach Anspruch 8,
**dadurch gekennzeichnet, dass**
der Energiespeicher ein elektrischer Energiespeicher (14) ist, der ausgangsseitig eine elektrische Versorgungsspannung bereitstellt.

10. Bremssystem (12) nach Anspruch 8 oder 9,
**dadurch gekennzeichnet, dass**
die Wandlereinheit (17) mit der Bremssteuerung (13) und/oder mit dem Aktuator (1) verbunden ist, wobei die Wandlereinheit (17) über wenigstens einen Umsetzer verfügt, der ausgangsseitig eine elektrische Größe in Abhängigkeit eines eingangsseitig zugeführten Signals für den Beladungszustand bereitstellt, wobei der oder die Umsetzer zur Verbindung mit einer pneumatischen Luftfeder (19) des Schienenfahrzeuges und/oder wenigstens einer pneumatischen Leitung (21) des Schienenfahrzeuges eingerichtet ist/sind.

11. Bremssystem (12) nach Anspruch 10,
**dadurch gekennzeichnet, dass**
die Wandlereinheit (17) über eine elektrische Versorgungsleitung (16) mit dem Energiespeicher (14) verbunden ist.

12. Bremssystem (12) nach einem der Ansprüche 8 bis 11,
**dadurch gekennzeichnet, dass**
die Datenleitung ein Datenbus (15) ist, welcher die Bremssteuerung (13), jeden Aktuator (1) und jede Wandlereinheit (17) miteinander verbindet.

13. Bremssystem (12) nach einem der Ansprüche 8 bis 12,
**dadurch gekennzeichnet, dass**
die Aktuatoren (1) über eine elektrische Sicherheitsschleife (25), die zum Übertragen von Steuerungssignalen eingerichtet ist, miteinander verbunden sind.

14. Bremssystem (12) nach einem der Ansprüche 8 bis 13,
**dadurch gekennzeichnet, dass**
Mittel zum Erfassen des Beladungszustandes und/oder der Masse des Schienenfahrzeugs, die mit Aktuatoren (1) verbunden sind, wobei die besagten Aktuator (1) in Abhängigkeit des Beladungszustandes und/oder der Masse die einzustellende Bremskraft begrenzen.

15. Schienenfahrzeug mit mehreren Wagen (23), die zu einem Fahrzeugverbund aneinander gekoppelt sind, wobei jeder Wagen (23) über wenigstens ein Drehgestell verfügt,
**gekennzeichnet durch**
ein Bremssystem (12) nach einem der Ansprüche 8 bis 14 und durch Aktuatoren (1) nach einem der Ansprüche 1 bis 7.

16. Schienenfahrzeug nach Anspruch 15,
**dadurch gekennzeichnet, dass**
jeder Wagen (23) wenigstens ein Bremssystem (12) gemäß einem der Ansprüche 8 bis 14 aufweist.

17. Schienenfahrzeug nach einem der Ansprüche 15 oder 16,
**dadurch gekennzeichnet, dass**
die besagten Bremssysteme (12) über eine Fahrzeugdatenleitung (24) miteinander verbunden sind.

18. Schienenfahrzeug nach Anspruch 17,
**dadurch gekennzeichnet, dass**
jede Bremssteuerung (13) über eine Fahrzeugbusschnittstelle an die Fahrzeugdatenleitung (24) angeschlossen ist.

19. Schienenfahrzeug nach einem der Ansprüche 15 bis 18,
**dadurch gekennzeichnet, dass**
das Schienenfahrzeug über eine sich durch alle Wagen (23) erstreckende elektrische Sicherheitsschleife (25) verfügt, wobei jeder Aktuator (1) mit der elektrischen Sicherheitsschleife (25) verbunden ist.

20. Schienenfahrzeug nach einem der Ansprüche 15 bis 19,
**dadurch gekennzeichnet, dass**
das Schienenfahrzeug eine sich durch alle Wagen (23) erstreckende Hauptluftleitung (21) zum Führen eines pneumatischen Steuerdruckes aufweist, wobei jede Wandlereinheit (17) mit der Hauptluftleitung (21) verbunden ist.

## Claims

1. Actuator (1) for a brake system (12) of a rail vehicle having means for generating a braking movement (5) of at least one pressing part (8) with a braking force (F), with a supply connection (4) for connecting the actuator (1) to an energy storage unit (14), with a control connection (3) for connecting a data line (15) and with a logic unit (2) which is connected to the control connection (3) and which is configured to set the braking force (F) as a function of a control signal of a brake controller (13) which is transferred over the data line (15), wherein the actuator (1) is configured in its entirety for mounting in a bogie of the rail vehicle and wherein the actuator is designed to be suitable for initiating an emergency braking operation,
**characterized in that** the actuator is designed to be suitable for setting the braking force (F) during the emergency braking operation to a maximum value which is dependent on additional load information of a converter unit (17).

2. Actuator (1) according to Claim 1,
**characterized by**
a braking force detection unit (10) for detecting a measured variable from which the generated braking force (F) can be derived as an actual value, wherein said braking force detection unit (10) is connected to the logic unit (2).

3. Actuator (1) according to Claim 1 or 2,
**characterized in that**
the supply connection (4) is an electrical supply connection which can be connected to an electrical energy supply line (16) and has output terminals at which a supply voltage drops when the actuator (1) operates.

4. Actuator (1) according to Claim 3,
**characterized in that**
the means for generating the braking movement (5) have an electromechanical force unit which is connected to the supply connection (4) and is configured to generate a mechanical triggering force as a function of electrical energy which is made available via the supply connection (4).

5. Actuator (1) according to Claim 4,
**characterized in that**
the electromechanical force unit is an electric motor, an electric pump or a piezoelement.

6. Actuator (1) according to one of the preceding claims,
**characterized in that**
the means for generating a braking movement (5) are self-energizing.

7. Actuator (1) according to one of the preceding claims,
**characterized by**
electrically drivable emergency triggering means for releasing the brake and connecting means, electrically connected to the emergency triggering means, for connecting an external electrical energy supply.

8. Brake system (12) for braking a rail vehicle having
- an actuator (1) which is configured in its entirety for mounting in a bogie of the rail vehicle and which is configured to generate a braking movement of at least one pressing part with a braking force (F),
- an energy store (14) which is connected to the actuator (1) via a supply line (16), and
- a brake controller (13) which makes available control signals and has the purpose of performing open-loop or closed-loop control of the brake system (12),
- in which the actuator (1) has a control connection (3) which is connected to the brake controller (13) via a data line (15) in order to receive the control signals, wherein the control connection is connected to a logic unit (2) of the actuator (1) which is configured to set the braking force (F) as a function of the control signals and
- in which the actuator is designed to be suitable for initiating an emergency braking operation,
**characterized in that** the actuator is designed to be suitable for setting the braking force (F) during the emergency braking operation to a maximum value which is dependent on additional load information of a converter unit (17).

9. Brake system (12) according to Claim 8,
**characterized in that**
the energy store is an electrical energy store (14) which makes available an electrical supply voltage on the output side.

10. Brake system (12) according to Claim 8 or 9,
**characterized in that**
the converter unit (17) is connected to the brake controller (13) and/or to the actuator (1), wherein the converter unit (17) has at least one converter which makes available an electrical variable on the output side as a function of a signal for the load state which is fed in on the input side, wherein the converter or converters is/are configured for connection to a pneumatic air spring (19) of the rail vehicle and/or at least one pneumatic line (21) of the rail vehicle.

11. Brake system (12) according to Claim 10,
**characterized in that**
the converter unit (17) is connected to the energy store (14) via an electrical supply line (16).

12. Brake system (12) according to one of Claims 8 to 11,
**characterized in that** the data line is a data bus (15) which connects the brake controller (13), each actuator (1) and each converter unit (17) to one another.

13. Brake system (12) according to one of Claims 8 to 12,
**characterized in that**
the actuators (1) are connected to one another via an electrical safety loop (25) which is configured to transmit control signals.

14. Brake system (12) according to one of Claims 8 to 13,
**characterized in that**
means for detecting the load state and/or the mass of the rail vehicle, which are connected to actuators (1), are provided, wherein said actuators (1) limit, as a function of the load state and/or the mass, the braking force to be set.

15. Rail vehicle having a plurality of cars (23) which are coupled to one another to form a vehicle train, wherein each car (23) has at least one bogie,
**characterized by**
a brake system (12) according to one of Claims 8 to 14, and by actuators (1) according to one of Claims 1 to 7.

16. Rail vehicle according to Claim 15,
**characterized in that**
each car (23) has at least one brake system (12) according to one of Claims 8 to 14.

17. Rail vehicle according to one of Claims 15 and 16, **characterized in that** said brake systems (12) are connected to one another via a vehicle data line (24).

18. Rail vehicle according to Claim 17,
**characterized in that**
each brake controller (13) is connected to the vehicle data line (24) via a vehicle bus interface.

19. Rail vehicle according to one of Claims 15 to 18,
**characterized in that**
the rail vehicle has an electrical safety loop (25) which extends through all the cars (23), wherein each actuator (1) is connected to the electrical safety loop (25).

20. Rail vehicle according to one of Claims 15 to 19,
**characterized in that**
the rail vehicle has a main air line (21) which extends through all the cars (23) and has the purpose of conducting a pneumatic control pressure, wherein each converter unit (17) is connected to the main air line (21).

## Revendications

1. Actionneur (1) d'un système (12) de frein d'un véhicule ferroviaire, comprenant des moyens de production d'un déplacement (5) de frein d'au moins une partie (8) de serrage par une force (F) de freinage, comprenant une borne (4) d'alimentation pour la liaison de l'actionneur (1) à une unité (14) d'accumulation d'énergie, comprenant une borne (3) de commande pour le raccordement d'une ligne (15) de données et comprenant une unité (2) logique, qui est reliée à la borne (3) de commande et qui est conçue pour régler la force (F) de freinage en fonction d'un signal de commande d'une commande (13) de frein transmis par la ligne (15) de données, l'actionneur étant conçu, dans son ensemble, pour le montage dans un boggie du véhicule ferroviaire et l'actionneur étant propre à provoquer un freinage d'urgence,
**caractérisé en ce que**
l'actionneur est propre à régler la force (F) de freinage lors du freinage d'urgence à une valeur maximum, qui dépend d'une information de charge d'une unité (17) de transducteur.

2. Actionneur (1) suivant la revendication 1,
**caractérisé par**
une unité (10) de relevé d'une force de freinage pour relever une grandeur de mesure à partir de laquelle la force (F) de freinage produite peut être déduite comme valeur réelle, ladite unité (10) de relevé d'une force de freinage étant reliée à l'unité (2) logique.

3. Actionneur (1) suivant la revendication 1 ou 2,
**caractérisé en ce que**
le borne (4) d'alimentation est une borne d'alimentation électrique, qui peut être reliée à une ligne (16) d'alimentation en énergie électrique et qui a des bornes de sortie où une tension d'alimentation chute, lors du fonctionnement de l'actionneur (1).

4. Actionneur (1) suivant la revendication 3,
**caractérisé en ce que**
les moyens de production d'un déplacement (5) de frein ont une unité de force électromécanique, qui est reliée à la borne (4) d'alimentation et qui est conçue pour la production d'une force mécanique de déclenchement en fonction d'une énergie électrique procurée par la borne (4) d'alimentation.

5. Actionneur (1) suivant la revendication 4,
**caractérisé en ce que**
l'unité de force électromécanique est un moteur électrique ou un élément piézo-électrique.

6. Actionneur (1) suivant l'une des revendications précédentes,
**caractérisé en ce que**
les moyens de production d'un mouvement (5) de frein sont auto-assistés.

7. Actionneur (1) suivant l'une des revendications précédentes,
**caractérisé par**
des moyens de desserrage d'urgence pouvant être entraînés électriquement pour desserrer le frein et des moyens de connexion reliés électriquement aux moyens de desserrage d'urgence pour la connexion d'une alimentation extérieure en énergie électrique.

8. Système (12) de frein pour freiner un véhicule ferroviaire comprenant
- un actionneur (1), qui est conçu pour le montage dans son ensemble dans un boggie du véhicule ferroviaire et qui est conçu pour la production d'un déplacement de frein d'au moins une partie de serrage par une force (F) de freinage,
- un accumulateur (14) d'énergie, qui est relié à l'actionneur (1) par une ligne (16) d'alimentation et
- une commande (13) de frein, procurant des signaux de commande, pour commander ou réguler le système (12) de frein,
- dans lequel l'actionneur (1) a une borne (3) de commande, qui, pour la réception des signaux de commande, est reliée à la commande (13) de frein par une ligne (15) de données, la borne de commande étant reliée à une unité (2) logique de l'actionneur (1), qui est conçue pour régler la force (F) de frein en fonction des signaux de commande et
- dans lequel l'actionneur est propre à provoquer un freinage d'urgence,
**caractérisé en ce que**
l'actionneur est propre à régler la force (F) de frein, lors du freinage d'urgence, à une valeur maximum dépendant d'une information de charge d'une unité (17) de transducteur.

9. Système (12) de frein suivant la revendication 8,
**caractérisé en ce que**
l'accumulateur d'énergie est un accumulateur (14) d'énergie électrique, qui procure, du côté de la sortie, une tension d'alimentation électrique.

10. Système (12) de frein suivant la revendication 8 ou 9,
**caractérisé en ce que**
l'unité (17) de transducteur est reliée à la commande (13) de frein et/ou à l'actionneur (1), l'unité (17) de transducteur disposant d'au moins un convertisseur, qui procure, du côté de la sortie, une grandeur électrique en fonction d'un signal, envoyé du côté de l'entrée, de l'état de charge, le ou les convertisseurs étant conçu (s), pour la liaison, à un ressort (19) pneumatique du véhicule ferroviaire et/ou à au moins une ligne (21) pneumatique du véhicule ferroviaire.

11. Système (12) de frein suivant la revendication 10,
**caractérisé en ce que**
l'unité (17) de transducteur est reliée à l'accumulateur (14) d'énergie par une ligne (16) d'alimentation électrique.

12. système (12) de frein suivant l'une des revendications 8 à 11,
**caractérisé en ce que**
la ligne de données est un bus (15) de données, qui relie entre eux la commande (13) de frein, chaque actionneur (1) et chaque unité (17) de transducteur.

13. Système (12) de frein suivant l'une des revendications 8 à 12,
**caractérisé en ce que**
les actionneurs (11) sont reliés entre eux par une boucle (25) de sécurité électrique, qui est conçue pour transmettre des signaux de commande.

14. Système (12) de frein suivant l'une des revendications 8 à 13,
**caractérisé en ce qu'**
il est prévu des moyens pour relever l'état de charge et/ou la masse du véhicule ferroviaire, lesquels moyens sont reliés à l'actionneur (1), ledit actionneur (1) limitant la force de frein réglée en fonction de l'état de charge et/ou de la masse.

15. Véhicule ferroviaire ayant plusieurs voitures (23), qui sont attelées les unes aux autres en une rame de véhicule, chaque voiture (23) disposant d'au moins un boggie,
**caractérisé par**
un système (12) de frein suivant l'une des revendications 8 à 14 et par des actionneurs (1) suivant l'une des revendications 1 à 7.

16. Véhicule ferroviaire suivant la revendication 15,
**caractérisé en ce que**
chaque voiture (23) a au moins un système (12) de frein suivant l'une des revendications 8 à 14.

17. Véhicule ferroviaire suivant l'une des revendications 15 ou 16,
**caractérisé en ce que**
lesdits systèmes (12) de frein sont reliés entre eux par une ligne (24) de données de véhicule.

18. Véhicule ferroviaire suivant la revendication 17,
**caractérisé en ce que**
chaque commande (13) de frein est connectée à la ligne (24) de données de véhicule par une interface de bus de véhicule.

19. Véhicule ferroviaire suivant l'une des revendications 15 à 18,
**caractérisé en ce que**
le véhicule ferroviaire dispose d'une boucle (25) de sécurité électrique, passant dans toutes les voitures (23), chaque actionneur (1) étant relié à la boucle (25) de sécurité électrique.

20. Véhicule ferroviaire suivant l'une des revendications 15 à 19,
**caractérisé en ce que**
le véhicule ferroviaire a, pour l'application d'une pression de commande pneumatique, une ligne (21) pneumatique principale, passant dans toutes les voitures (23), chaque unité (17) de transducteur étant reliée à la ligne (21) pneumatique principale.
